# EUROPEAN PATENT SPECIFICATION

(11) **EP 2 203 089 B1**
(45) Date of publication and mention of the grant of the patent: **13.01.2016**
(21) Application number: 08843802.3
(22) Date of filing: 17.10.2008
(51) Int. Cl.: A47C 3/30, A47B 91/02, F16M 7/00

(54) **IMPROVED LEVELLING DEVICE**
VERBESSERTES NIVELLIERGERÄT
DISPOSITIF AMÉLIORÉ D'AJUSTEMENT

(30) Priority: 30.10.2007 IT MI20072089
(43) Date of publication of application: 07.07.2010
(73) Proprietor: LEONARDO S.r.l., 22060 Figino Serenza (CO) (IT)
(72) Inventor: CATTANEO, Carlo, 22060 Figino Serenza (CO) (IT)
(74) Representative: Martegani, Franco
(86) International application number: PCT/IB2008/002828
(87) International publication number: WO 2009/056935

(56) References cited:
- EP-A- 0 503 701
- EP-A- 0 733 322
- EP-A- 1 698 253
- EP-A- 1 832 201
- ES-A1- 2 162 569
- FR-A- 729 230

## Description

The present invention refers to an improved levelling device.

Generally, currently there are various types of levelling devices which comprise a first portion constrainable in a stable manner to the element intended to be levelled, generally a piece of furniture, and a second portion adjustable in position with respect to the first to level the abovementioned piece of furniture.

In particular, both for aesthetic reasons and in order to reduce the overall dimensions, currently there are levelling devices shaped in such a manner to be accommodated in a seat directly provided for in a piece of furniture, for example in a shoulder, where such levellers can be actuated in adjustment outside the piece of furniture by means of a tool such as for example a screwdriver or a hexagonal key.

An example of a levelling device of the latter type is described in the EP0733322 European patent.

Such levelling device comprises a moveable portion, foot-shaped at the lower part, adjustable in position by means by means of a screw-nut screw mechanism wherein the screw, provided at the head with a toothed rim, is in turn rotated by a pinion element.

In particular, the foot, which always lies against the ground, the screw and the pinion according to the European patent EP0733322 are all accommodated inside a single covering in such a manner that the levelling device can substantially be entirely inserted into the piece of furniture reducing the overall dimensions and not damaging the aesthetic properties of the piece of furniture itself.

The only portion outside such covering is the lower foot-shaped portion which lies against the ground.

Furthermore, such abovementioned device comprises, at the lower part of the screwhead, a collar accommodated in a corresponding annular seat provided for inside the covering.

Such embodiment described in the EP0733322 European patent advantageously allows performing adjustments even in conditions wherein the piece of furniture into which the levelling device is inserted is loaded.

In particular, currently the weight of the piece of furniture is transferred by the screw-nut screw mechanism in the abovementioned collar-seat coupling. However, nowadays, for aesthetic and/or overall dimensions purposes, pieces of furniture having the thickness of the walls, and in particular of the shoulder, smaller with respect to the measures deemed standard in the past are more and more common in the market.

In particular, thicknesses of shoulders of pieces of furniture reduced from 18 to 16 mm, or even less, are commonly available today.

Consequently, such reduction of thickness leads to a reduction of the dimensions of the levelling device, which, as a matter of fact, is to be inserted into the shoulder of the abovementioned piece of furniture, and this causes an increase of the internal stress acting on the collar-seat coupling of the known devices, such to cause damage to the device itself and not allow any further adjustment of the levelling.

As a matter of fact, after loading the piece of furniture having a thin shoulder, thus also the collar-seat coupling being small in size, there occurs stresses weighing on the device (such stresses being transmitted by the collar to the external covering, which does not lie against the ground) such to jeopardise the proper operation of the device. EP-A-1 832 201 discloses an adjustable leg for furniture, wherein the castellation of a regulating screw is operated directly by means of the tip of a screwdriver. EP-A-1 698 253 concerns an adjustable foot device, in which the load of the cabinet weighs directly onto the base of the footboy, also passing between a first threading on the inner surface of a hollow outer shell and a second threading provided on the outer surface of an inner cylindrical body which is capable of sliding axially relative to said outer shell. A general object of the present invention is that of overcoming the abovementioned drawbacks of the prior art in an extremely simple, inexpensive and particularly functional manner.

Another object is that of providing a levelling device in which the mechanism for controlling the movement of the foot element can be actuated by the user manually without stresses when performing the required levelling adjustments even in conditions in which the piece of furniture is loaded and has a shoulder with a thickness smaller than 18 mm, for example 16 mm.

Another object is that of providing a levelling device in which the transfer of the weight of the piece of furniture is suitably transmitted only to the ground. According to the abovementioned objects, according to the present invention, conceived was an improved levelling device having the characteristics outlined in the attached claims.

The functional and structural characteristics of the present invention and its advantages with respect to the prior art shall be clearer and more evident from an observation of the following description, referring to the attached drawings, which show an improved levelling device made according to the innovative principles of the invention itself.

In the drawings:
- figure 1 shows an exploded perspective view of a first embodiment of an improved levelling device according to the present invention;
- figure 2 is a perspective view of the improved levelling device of figure 1 partially assembled;
- figures 3-5 are sectional views of the improved levelling device of figure 1 assembled;
- figure 6 shows an exploded perspective view of another embodiment of an improved levelling device according to the present invention;
- figure 7 is a sectional view of the improved levelling device of figure 6 assembled;
- figure 8 shows an exploded perspective view of another embodiment of an improved levelling device according to the present invention;
- figure 9 is a sectional view of the improved levelling device of figure 8 assembled;
- figure 10 shows an exploded perspective view of another embodiment of an improved levelling device according to the present invention;
- figure 11 is a sectional view of the improved levelling device of figure 10 assembled;
- figure 12 shows an exploded perspective view of another embodiment of an improved levelling device according to the present invention;
- figure 13 is a sectional view of the improved levelling device of figure 12 assembled;
- figure 14 shows an exploded perspective view of another embodiment of an improved levelling device according to the present invention; and
- figure 15 is a sectional view of the improved levelling device of figure 14 assembled.

Referring to the drawings, an improved levelling device in question is indicated in its entirety by 10.

Such levelling device 10 can be accommodated in a seat 12, preferably cylindrical and having a diameter even smaller than 14 mm, provided for in a shoulder of a piece of furniture 13 and comprises a foot element 14 shaped in such a manner to guarantee a stable support against the ground and preferably provided with a widened support base 25, the foot element 14 being adjustable in position with respect to the levelling device 10 by means of a screw 15 - nut screw 16 adjustment mechanism.

In particular, the abovementioned foot element 14 has a cylindrical development and comprises, in a portion opposite to the abovementioned widened base 25, a threaded hole (nut screw) 16 into which the threaded shank 40 of the screw 15 is screwed.

At a position opposite to the threaded shank 40 the screw 15 comprises a free end of the head 11, preferably cylindrical-shaped, shaped in such a manner to constantly engage a complementarily shaped pinion element 17, such pinion element 17 is rotatable outside of the piece of furniture 13 by the user by means of a tool.

In such aforedescribed mechanism, the free end of the head 11 of the screw 15 cooperates with centring means 51, 52 inside the levelling device 10.

By rotating the screw 15, through the rotation imparted to the pinion 17, an upward or downward motion is indirectly transmitted to the foot element 14.

Both the screw 15 and the pinion element 17 are enclosed in a covering element 18, 20, 21, 22 from which the abovementioned foot 14 of the piece of furniture partially projects at the lower part. According to the invention and characteristically, according to the points outlined above, it is clear how the screw 15 and the pinion 17 are directly engaged to each other and to the covering element 18, 20, 21, 22 thus leading to nullifying the clearances of the relative kinematic chain, hence leading to a proper and regular operation of the levelling device even under heavy loads.

The length of the portion of the foot 14 which projects from the covering element 18, 20, 21, 22 can be varied by operating on the pinion 17 and allows levelling the piece of furniture 13 into which the device 10 is inserted.

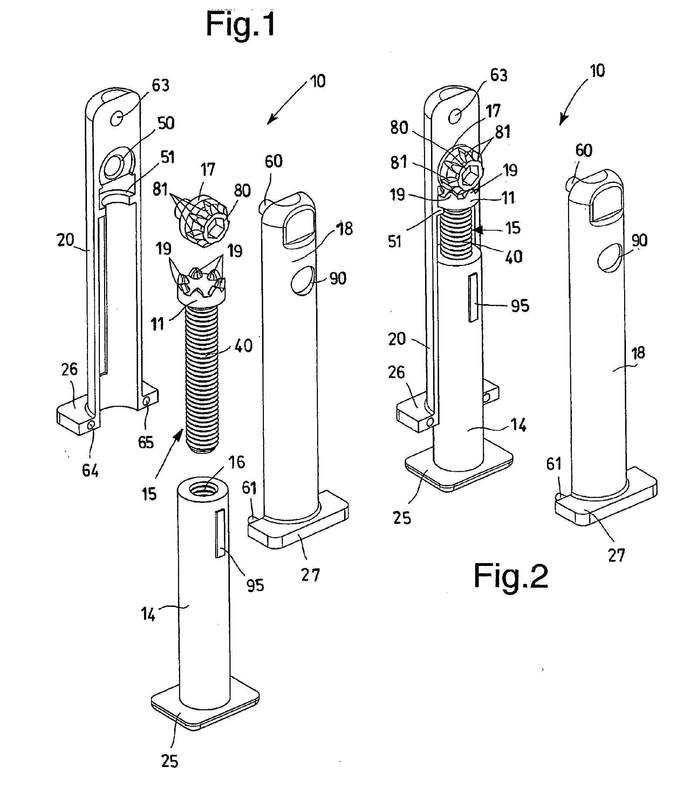

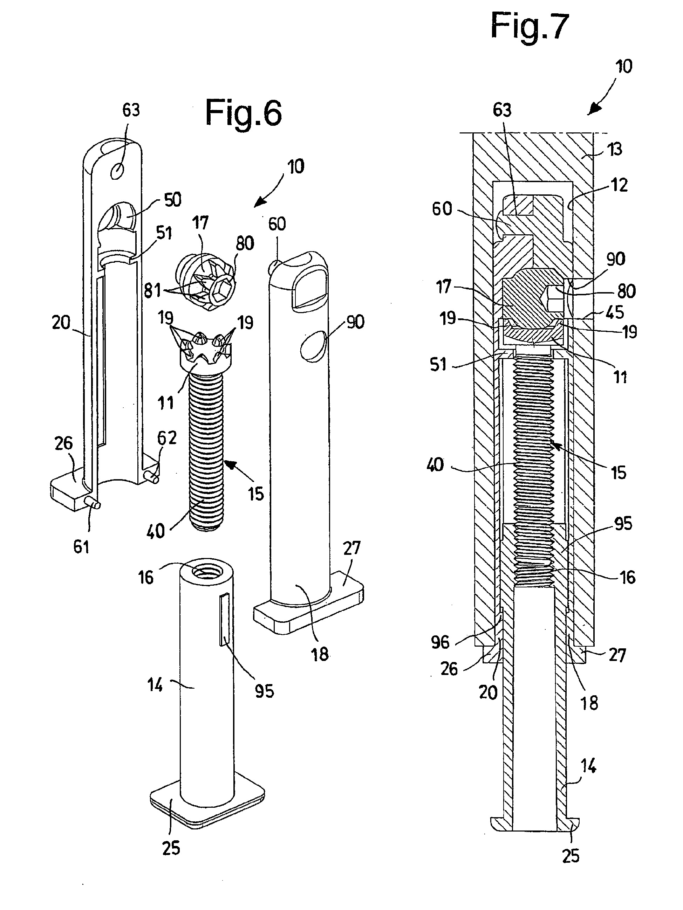

According to two alternative embodiments the pinion element 17 may comprise, at the rear part of the portion which engages the head 11 of the screw 15, a support pin, as shown in the figures 1 and 2, or it can be shaped to form a "barrel" without such pin as shown in figures 6 and 7.

In particular, according to the invention the free end of the shaped cylindrical end 11 comprises a plurality of shaped projections 19 facing the opposite direction with respect to the threaded shaft 40 and arranged spaced peripherally one after the other along a circular peripheral rim above the free end of the head 11.

Thus, such shaped projections 19 provide a particular toothed rim. The pinion in turn comprises a plurality of lateral projections 81 complementary to the projections 19 in such a manner to provide a constantly engaged tooth coupling.

The pinion element 17, which as mentioned comprises a plurality of lateral projections 81 shaped to constantly engage the toothed rim formed by the plurality of shaped projections 19, is accommodated in a seat 50 provided for inside the covering element 18, 20, 21, 22 and it is in contact with the free end of the head 11 which is in turn maintained in position by said centring means 51, 52.

Thus the screw 15 is constrained inside the covering element 18, 20, 21, 22, and in particular the head 11 is constrained to the pinion 17 at the upper part.

Advantageously, according to the invention, the load weighing on the device 10 coming from the weight of the piece of furniture is entirely transferred to the ground.

As a matter of fact, the load initially generated by the weight of the piece of furniture on the external surface of the covering 18, 20, 21, 22, is transmitted to the pinion 17 given that the seat of the pinion 50 is made in a single piece with the covering 18, 20, 21, 22 itself.

At this point, the load is transmitted from the pinion 17 to the screw 15 which, being in contact substantially solely with the foot 14, transmits the load to the latter which in turn, lying against the ground, shall transfer the load to the ground.

Thus, according to the invention, there are no internal stress conditions capable of jeopardising the manual descent and ascent of the foot element 14 thus excessive strain is not required of the user.

As observable in the examples of figures 1-11, according to a preferred embodiment the abovementioned at least one centring element 51, 52 comprises an internal annular projection 51 of the covering element 18, 20, 21, 22 to provide a centring seat for the head 11.

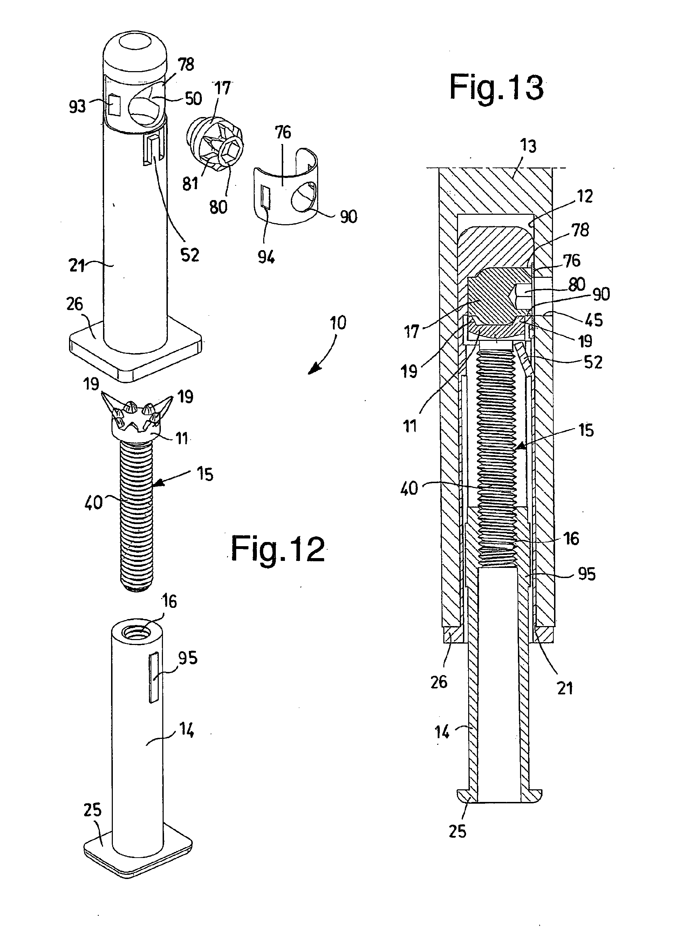

Alternatively the at least one centring element 51, 52 can be, as schematically shown in figures 12 and 13, at least one flap 52 with a vertical development provided for on the lateral surface of the covering element 18, 20, 21, 22.

In particular, such at least one flap 52 is deformable to achieve a position facing inwards after inserting the screw 15 into the covering element 18, 20, 21, 22 and upon achieving such position, visible in figure 13, the at least one flap 52 serves as a lower centring for the head 11 locking its outlet with respect to the covering element 18, 20, 21, 22.

As observable in the example of figure 6 according to the invention the covering element 18, 20, 21, 22 may comprise two half-shell elements 18, 20.

In such case, the two half-shell elements 18, 20 are maintained at relative contact to provide a single shell through at least one pin element 60, 61, 62 insertable into at least one relative hole 63, 64, 65, in which both the at least one pin element 60, 61, 62 and the relative at least one hole 63, 64, 65 are provided for in the portions of relative contact of the two half-shell elements 18, 20.

According to a preferred embodiment the levelling device 10 comprises three pins 60, 61, 62 of which a first pin 60 is arranged at the upper side and is a pin to be riveted while the remaining two pins 61, 62 are arranged at the lower part and they are forced coupling pins.

The aforedescribed embodiment is for example shown in figure 1.

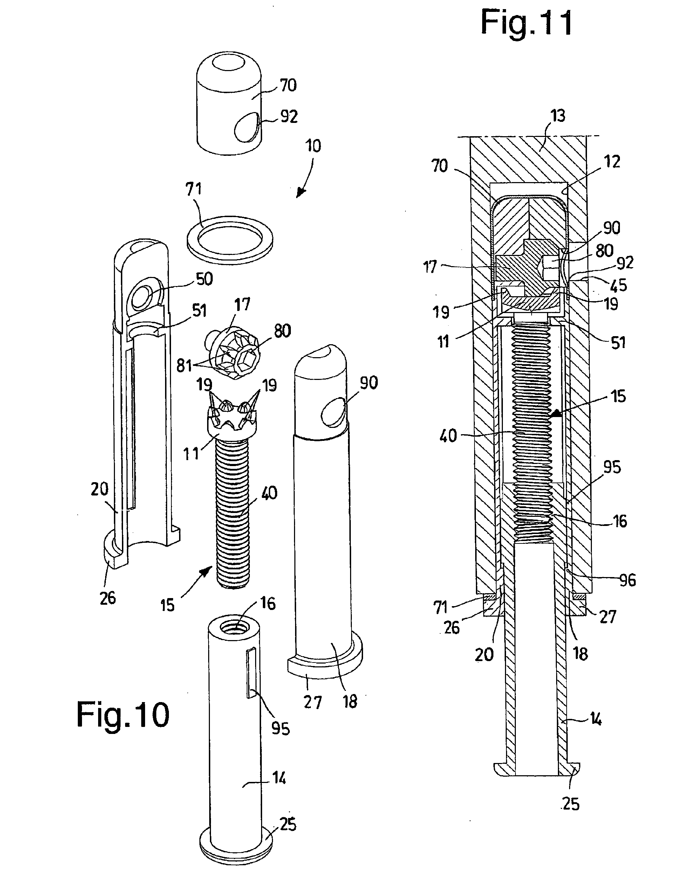

Alternatively, it can be provided for that the two half-shell elements 18, 20 be maintained in contact through an external cap element 70 arranged on top of the levelling device 10 and through a washer element 71 arranged at the lower part as shown in figures 10 and 11.

In particular, the washer element 71 is settled at the lower part in abutment against projections 26, 27 provided for at the lower part of the due half-shell elements 18, 20 once arranged in contact.

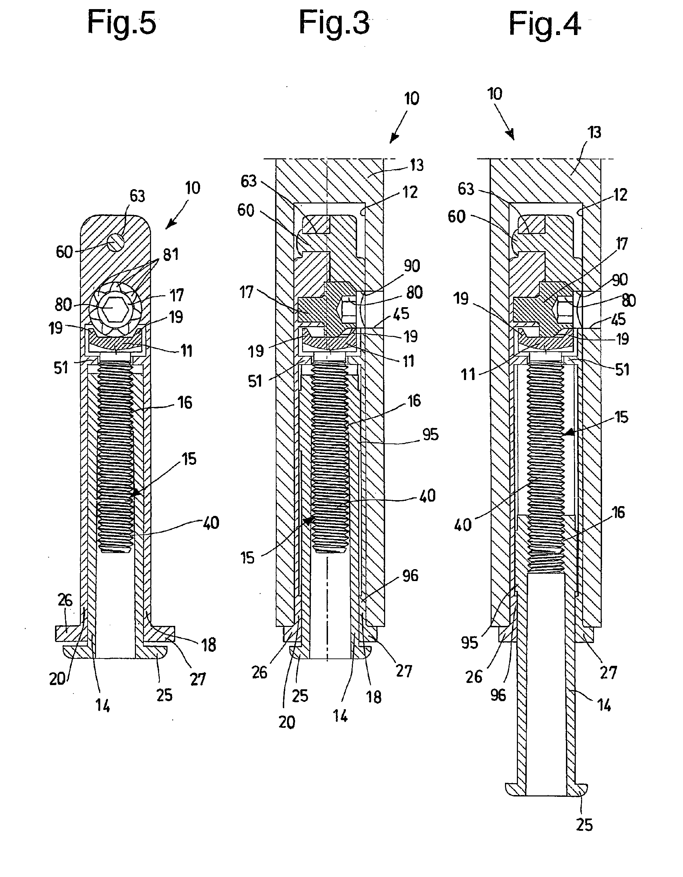

Furthermore, as observable in the example in figure 3, the at least one projection 26, 27 provided for at the lower part of the two half-shell elements 18, 20, or more generally at the lower part of the covering element 18, 20, 21, 22, can also serve as a lower abutment for the levelling device 10 against the seat 12 provided for in the piece of furniture 13.

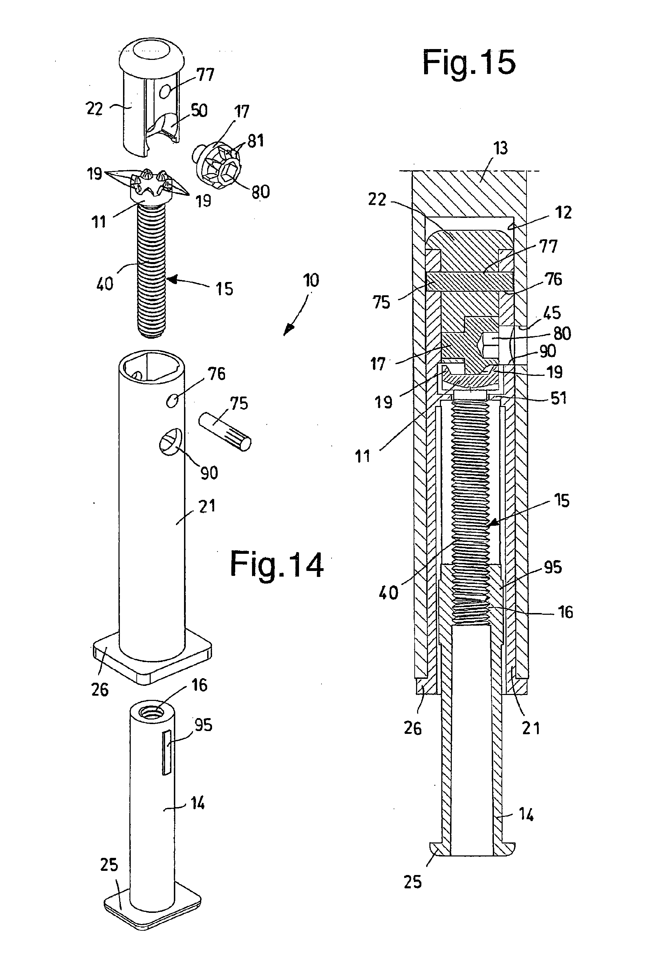

According to the invention, it is provided for that the covering element 18, 20, 21, 22 possibly comprises, according to another preferred embodiment shown in figures 14 and 15, a sleeve element 21 and an upper cap element 22 the two being mutually constrained by a pin element 75 passing through holes 76a and 77 provided for on the sleeve element 21 and on the upper cap 22 respectively.

According to such embodiment the assembly of the levelling device 10 comprises the steps of fitting the foot 14 into the sleeve element 21, screwing the screw 15 into the nut screw 16 in the foot 14, fitting the pinion 17 into the upper cap element 22, coupling the latter on top of the sleeve element 21 and constraining it at such position with the abovementioned pin 75. Alternatively, as shown in figures 12 and 13, the covering element 18, 20, 21, 22 is a single sleeve element 21 closed at the upper part and provided with at least one element or flap 52 deformable to achieve a position facing inwards the levelling device 10 and a lateral opening 78 for inserting the pinion element 17.

Furthermore, in order to avoid the outlet of the pinion element 17, the aforedescribed embodiment also comprises an element 76 for partial closure of the abovementioned lateral opening 78, in such case the partial closure element 76 is lockable on the sleeve 21.

According to a preferred embodiment for providing such locking, provided for is a snap-coupling between the partial closure element 76 and sleeve 21 due to the presence of shaped portions 93, 94 as shown in figure 12.

According to such embodiment the assembly of the levelling device 10 comprises the steps of screwing the screw 15 onto the nut screw 16 in the foot 14, fitting the foot 14 into the sleeve element 21, folding the flap 52 at the lower part of the head 11 of the screw 15, fitting the pinion 17 into the sleeve element 21 and locking it by means of the partial, closure element 76.

As mentioned at the beginning of the description the pinion element 17 can be actuated outside the piece of furniture 13 by a user through a tool to rotate the screw 15 and control the ascent or descent of the foot element 14 with respect to the covering element 18, 20, 21, 22.

In particular, in order to allow such actuation, the pinion 17 comprises at least one slot 80, 81a for the radial insertion of the abovementioned tool.

According to some examples the tool to be used can be a hexagonal key or a cross-headed screwdriver depending on the internal shape of the at least one slot 80, 81a provided for on the pinion element 17.

In the example shown in figure 1 the pinion element 17 comprises only one slot 80 and in such manner it is actuatable only from one side of the piece of furniture 13.

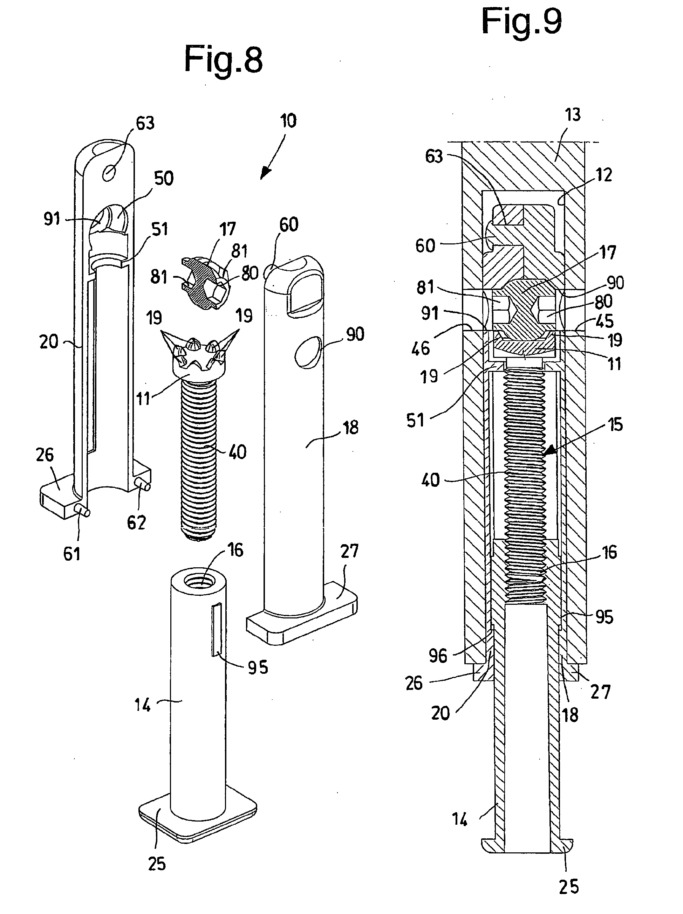

Alternatively, like in the example of figure 8, the pinion 17 can comprise two slots 80, 81a and in such manner be actuatable from both sides of the seat 12 of the piece of furniture 13.

At the at least one slot 80, 81a also the covering element 18, 20, 21, 22 comprises a gap 90, 91, 92 to allow the radial insertion of the aforementioned manoeuvre tool.

Obviously also the seat 12 of the shoulder of the piece of furniture 13 comprises at least one gap 45, 46 at the at least one slot 80, 81a which allows access from outside the piece of furniture 13 to the pinion element 17.

Lastly, in order to prevent the foot element 14 from inadvertently coming off the covering element 18, 20, 21, 22 in which it slides, according to the invention it is provided for that the foot element 14 may comprise at least one external abutment 95 and the covering element 18, 20, 21, 22 at least one relative limit stop abutment 96 for the abovementioned at least one external abutment 95.

The contact between the at least one abutment 96 with the at least one relative external abutment 95 determines, blocking it, the limit stop of the foot element 14 preventing its complete outlet.

It is entirely easy to understand the operation of the device subject of the invention.

The levelling device 10 according to the present invention is intended to be incorporated in a seat 12 provided for in a shoulder of a piece of furniture 13 provided with a thickness even smaller than 16 mm.

By rotating the pinion element 17, held inside the levelling device 10 but easily accessible from outside, it triggers the rotation of the screw 15 and consequently, given that the screw is stably accommodated/constrained in a relative seat, the sliding of the foot 14 with respect to the covering element 18, 20, 21, 22.

In particular, the levelling device 10 subject of the present invention allows easy performance of the required levelling adjustments even under conditions of a loaded piece of furniture with a shoulder having dimensions smaller than 16 mm given that the loads are entirely transferred to the ground thus not developing internal stress conditions.

As a matter of fact the present invention is particularly advantageous given that it optimises the distribution of stresses which develop allowing a user to easily manoeuvre the device 10 even in case it is inserted in a shoulder 12 having dimensions smaller than 16 mm, for example 14 mm, with the piece of furniture 13 loaded.

According to the description outlined above referring to the figures, it is clear how an improved levelling device according to the present invention is particularly useful and advantageous. Thus the object mentioned at the introduction of the description is attained.

Obviously, the shapes of the improved levelling device of the present invention may be different from the one shown for exemplifying and non-limiting purposes in the drawings. Same case applies to the materials.

Therefore, the scope of protection of the invention is delimited by the attached claims.

## Claims

1. Levelling device (10) accomodatable in a seat (12) provided for in a shoulder of a piece of furniture (13) comprising a foot element (14) having a cylindrical development and provided with a widened support base (25), said foot element (14) comprising, in a position opposite to the above mentioned base (25), a threaded hole or nut screw (16) into which the threaded shank (40) of a screw (15) is screwed, said foot element (14) being adjustable in position with respect to the levelling device (10) by means of said screw (15)-nut screw (16) adjustment mechanism, said screw (15) further comprising a cylindrical head (11) shaped to constantly engage a complementarily shaped pinion element (17) actuatable to rotate said screw (15), said screw (15) and said pinion element (17) being enclosed inside a covering element (18,20,21,22) and directly engaged to each other and thereto, projecting from the lower part of such covering element (18,20,21,22) is said adjustable foot, **characterized in that** said free end of the shaped cylindrical head (11) comprises a plurality of shaped projections (19), facing the opposite direction with respect to said threaded shank (40), arranged spaced peripherally one after the other along a peripheral circular rim above said free end of the head (11), said pinion element (17) comprising a plurality of lateral projections (81) complementary to said projections (19) and cooperating each other, in such a manner to provide a constantly engaged tooth coupling.

2. Levelling device (10) according to claim 1 **characterised in that** said pinion element (17) is accommodated in a seat (50) provided for inside said covering element (18, 20, 21, 22) and **in that** said free end of the head (11) is arranged in contact at the lower part with at least one centring element (51, 52) inside said covering element (18, 20, 21, 22).

3. Levelling device (10) according to claim 2 **characterised in that** said at least one centring element (51, 52) is an internal annular projection (51) of said covering element (18, 20, 21, 22).

4. Levelling device (10) according to claim 3 **characterised in that** said at least one centring element (51, 52) is a flap (52) provided for on the surface of said covering element (18, 20, 21, 22) deformable to achieve a position facing inwards after inserting said screw (15) into said covering element (18, 20, 21, 22).

5. Levelling device (10) according to claim 1 **characterised in that** said covering element (18, 20, 21, 22) is made up of two half-shell elements (18, 20).

6. Levelling device (10) according to claim 5 **characterised in that** said two half-shell elements (18, 20) are maintained in contact by at least one pin element (60, 61, 62) insertable into relative holes (63, 64, 65) provided for in said two half-shell elements (18, 20).

7. Levelling device (10) according to claim 6 **characterised in that** said two half-shell elements (18, 20) are maintained in contact by an external cap element (70) at the upper part, and by a washer element (71) at the lower part.

8. Levelling device (10) according to claim 1 **characterised in that** said covering element (18, 20, 21, 22) is a sleeve element (21) and an upper cap element (22) relatively constrained by a pin element (75).

9. Levelling device (10) according to claim 1 **characterised in that** said covering element (18, 20, 21, 22) is a sleeve element (21) closed at the upper part and provided with a lateral opening (78) for inserting said pinion element (17) and closure element (76) for partially closing said lateral opening (78).

10. Levelling device (10) according to claim 1 **characterised in that** said pinion element (17) comprises at least one slot (80, 81a) for radial insertion of a tool for manoeuvring said pinion element (17).

11. Levelling device (10) according to the preceding claim **characterised in that** said covering element (18, 20, 21, 22) comprises at least one gap (90, 91, 92) at said at least one slot (80, 81a).

12. Levelling device (10) according to claim 1 **characterised in that** said foot element (14) comprises at least one external abutment (95) and said covering element (18, 20, 21, 22) comprises at least one relative limit stop abutment (96) for said at least one external abutment (95) of said foot element (14).

## Patentansprüche

1. Niveauausgleichsvorrichtung (10), die in einem Sitz (12) aufnehmbar ist, der in einer Schulter eines Möbelstücks (13) vorgesehen ist, das ein Fußelement (14) umfasst, das eine zylindrische Ausbildung besitzt und mit einer aufgeweiteten Trägerbasis (25) versehen ist, wobei das Fußelement (14) in einer Position, die der oben erwähnten Basis (25) entgegengesetzt ist, ein Gewindeloch oder eine Mutternschraube (16) umfasst, in die der Gewindeschaft (14) einer Schraube (15) geschraubt ist, wobei das Fußelement (14) in Position in Bezug auf die Niveauausgleichsvorrichtung (10) mittels des Einstellmechanismus aus Schraube (15) - Mutternschraube (16) einstellbar ist, wobei die Schraube (15) ferner einen Zylinderkopf (11) umfasst, der so geformt ist, dass er konstant mit einem komplementär geformten Ritzelelement (17) in Eingriff steht, das betätigbar ist, die Schraube (15) in Drehung zu versetzen, wobei die Schraube (15) und das Ritzelelement (17) innerhalb eines Abdeckelements (18, 20, 21, 22) umschlossen sind und direkt miteinander und daran in Eingriff stehen, wobei von dem unteren Teil eines derartigen Abdeckelements (18, 20, 21, 22) der einstellbare Fuß vorragt, **dadurch gekennzeichnet, dass** das freie Ende des geformten zylindrischen Kopfes (11) eine Mehrzahl geformter Vorsprünge (19) umfasst, die zu der entgegengesetzten Richtung in Bezug auf den Gewindeschaft (40) weisen und um den Umfang beabstandet nacheinander entlang eines Umfangskreisrandes über dem freien Ende des Kopfes (11) angeordnet sind, wobei das Ritzelelement (17) eine Mehrzahl seitlicher Vorsprünge (81) umfasst, die komplementär zu den Vorsprüngen (19) sind und miteinander auf eine solche Weise zusammenwirken, dass eine konstant in Eingriff stehende Zahnkopplung bereitgestellt wird.

2. Niveauausgleichsvorrichtung (10) nach Anspruch 1, **dadurch gekennzeichnet, dass** das Ritzelelement (17) in einem Sitz (50) aufgenommen ist, der innerhalb des Abdeckelements (18, 20, 21, 22) vorgesehen ist, und dass das freie Ende des Kopfes (11) an dem unteren Teil in Kontakt mit zumindest einem Zentrierelement (51, 52) innerhalb des Abdeckelements (18, 20, 21, 22) angeordnet ist.

3. Niveauausgleichsvorrichtung (10) nach Anspruch 2, **dadurch gekennzeichnet, dass** das zumindest eine Zentrierelement (51, 52) ein innerer ringförmiger Vorsprung (51) des Abdeckelements (18, 20, 21, 22) ist.

4. Niveauausgleichsvorrichtung (10) nach Anspruch 3, **dadurch gekennzeichnet, dass** das zumindest eine Zentrierelement (51, 52) eine Klappe (52) ist, die an der Fläche des Abdeckelements (18, 20, 21, 22) vorgesehen und verformbar ist, um eine Position zu erreichen, die nach dem Einsetzen der Schraube (15) in das Abdeckelement (18, 20, 21, 22) nach innen weist.

5. Niveauausgleichsvorrichtung (10) nach Anspruch 1, **dadurch gekennzeichnet, dass** das Abdeckelement (18, 20, 21, 22) aus zwei Halbschalenelementen (18, 20) besteht.

6. Niveauausgleichsvorrichtung (10) nach Anspruch 5, **dadurch gekennzeichnet, dass** die beiden Halbschalenelemente (18, 20) durch zumindest ein Stiftelement (60, 61, 62) in Kontakt gehalten werden, das in relative Löcher (63, 64, 65) einsetzbar ist, die in den beiden Halbschalenelementen (18, 20) vorgesehen sind.

7. Niveauausgleichsvorrichtung (10) nach Anspruch 6, **dadurch gekennzeichnet, dass** die beiden Halbschalenelemente (18, 20) durch ein externes Kappenelement (70) an dem oberen Teil und durch ein Beilagscheibenelement (71) an dem unteren Teil in Kontakt gehalten werden.

8. Niveauausgleichsvorrichtung (10) nach Anspruch 1, **dadurch gekennzeichnet, dass** das Abdeckelement (18, 20, 21, 22) ein Hülsenelement (21) und ein oberes Kappenelement (22) ist, das durch ein Stiftelement (75) relativ eingeschränkt ist.

9. Niveauausgleichsvorrichtung (10) nach Anspruch 1, **dadurch gekennzeichnet, dass** das Abdeckelement (18, 20, 21, 22) ein Hülsenelement (21), das an dem oberen Teil geschlossen und mit einer seitlichen Öffnung (78) zum Einsetzen des Ritzelelements (17) versehen ist, und ein Verschlusselement (76) zum teilweisen Schließen der seitlichen Öffnung (78) ist.

10. Niveauausgleichsvorrichtung (10) nach Anspruch 1, **dadurch gekennzeichnet, dass** das Ritzelelement (17) zumindest einen Schlitz (80, 81 a) zum radialen Einsetzen eines Werkzeugs zum Manövrieren des Ritzelelements (17) umfasst.

11. Niveauausgleichsvorrichtung (10) nach einem der vorhergehenden Ansprüche, **dadurch gekennzeichnet, dass** das Abdeckelement (18, 20, 21, 22) zumindest einen Spalt (90, 91, 92) an dem zumindest einen Schlitz (80, 81 a) umfasst.

12. Niveauausgleichsvorrichtung (10) nach Anspruch 1, **dadurch gekennzeichnet, dass** das Fußelement (14) zumindest einen äußeren Anschlag (95) umfasst und das Abdeckelement (18, 20, 21, 22) zumindest einen Stoppanschlag (96) relativen Begrenzung für den zumindest einen externen Anschlag (95) des Fußelements (14) umfasst.

## Revendications

1. Dispositif de mise à niveau (10) pouvant être logé dans un siège (12) prévu dans un épaulement d'un meuble (13) comprenant un élément de pied (14) ayant un développement cylindrique et pourvu d'une base de support élargie (25), ledit élément de pied (14) comprenant, en une position opposée à la base susmentionnée (25), un trou fileté ou vis femelle (16) dans lequel on visse la tige filetée (40) d'une vis (15), ledit élément de pied (14) étant réglable en position par rapport au dispositif de mise à niveau (10) au moyen dudit mécanisme de réglage à vis (15) et vis femelle (16), ladite vis (15) comprenant en outre une tête cylindrique (11) façonnée pour être en prise constante avec un élément formant pignon de forme complémentaire (17) pouvant être actionné pour faire tourner ladite vis (15), ladite vis (15) et ledit élément formant pignon (17) étant enfermés à l'intérieur d'un élément de protection (18, 20, 21, 22) et étant mis en prise directement l'un avec l'autre et avec ce dernier, ledit pied réglable faisant saillie depuis la partie inférieure de cet élément de protection (18, 20, 21, 22), **caractérisé en ce que** ladite extrémité libre de la tête cylindrique façonnée (11) comprend une pluralité de protubérances façonnées (19), orientées dans la direction opposée par rapport à ladite tige filetée (40), disposées de façon espacée l'une après l'autre sur la périphérie d'un rebord circulaire périphérique au-dessus de ladite extrémité libre de la tête (11), ledit élément formant pignon (17) comprenant une pluralité de protubérances latérales (81) complémentaires desdites protubérances (19) et coopérant entre elles, de manière à donner un accouplement de dents en prise constante.

2. Dispositif de mise à niveau (10) selon la revendication 1, **caractérisé en ce que** ledit élément formant pignon (17) est logé dans un siège (50) prévu à l'intérieur dudit élément de protection (18, 20, 21, 22) et **en ce que** ladite extrémité libre de la tête (11) est mise en contact dans sa partie inférieure avec au moins un élément de centrage (51, 52) à l'intérieur dudit élément de protection (18, 20, 21, 22).

3. Dispositif de mise à niveau (10) selon la revendication 2, **caractérisé en ce que** ledit au moins un élément de centrage (51, 52) est une protubérance annulaire interne (51) dudit élément de protection (18, 20, 21, 22).

4. Dispositif de mise à niveau (10) selon la revendication 3, **caractérisé en ce que** ledit au moins un élément de centrage (51, 52) est un rabat (52) placé sur la surface dudit élément de protection (18, 20, 21, 22), déformable pour atteindre une position orientée vers l'intérieur après insertion de ladite vis (15) dans ledit élément de protection (18, 20, 21, 22).

5. Dispositif de mise à niveau (10) selon la revendication 1, **caractérisé en ce que** ledit élément de protection (18, 20, 21, 22) est constitué de deux éléments formant demi coques (18, 20).

6. Dispositif de mise à niveau (10) selon la revendication 5, **caractérisé en ce que** lesdits deux éléments formant demi coques (18, 20) sont maintenus en contact par au moins un élément formant axe (60, 61, 62) pouvant être inséré dans des trous relatifs (63, 64, 65) prévus dans lesdits deux éléments formant demi coques (18, 20).

7. Dispositif de mise à niveau (10) selon la revendication 6, **caractérisé en ce que** lesdits deux éléments formant demi coques (18, 20) sont maintenus en contact par un élément formant chapeau extérieur (70) dans la partie supérieure, et par un élément formant rondelle (71) dans la partie inférieure.

8. Dispositif de mise à niveau (10) selon la revendication 1, **caractérisé en ce que** ledit élément de protection (18, 20, 21, 22) est un élément formant manchon (21) et un élément formant chapeau supérieur (22) retenu relativement par un élément formant axe (75).

9. Dispositif de mise à niveau (10) selon la revendication 1, **caractérisé en ce que** ledit élément de protection (18, 20, 21, 22) est un élément formant manchon (21) fermé dans sa partie supérieure et pourvu d'une ouverture latérale (78) pour insérer ledit élément formant pignon (17) et d'un élément de fermeture (76) pour fermer partiellement ladite ouverture latérale (78).

10. Dispositif de mise à niveau (10) selon la revendication 1, **caractérisé en ce que** ledit élément formant pignon (17) comprend au moins une fente (80, 81a) pour l'insertion radiale d'un outil servant à manipuler ledit élément formant pignon (17).

11. Dispositif de mise à niveau (10) selon la revendication précédente, **caractérisé en ce que** ledit élément de protection (18, 20, 21, 22) comprend au moins un espace (90, 91, 92) au niveau de ladite au moins une fente (80, 81a).

12. Dispositif de mise à niveau (10) selon la revendication 1, **caractérisé en ce que** ledit élément de pied (14) comprend au moins une butée extérieure (95) et ledit élément de protection (18, 20, 21, 22) comprend au moins une butée de limite relative (96) pour ladite au moins une butée extérieure (95) dudit élément de pied (14).
